# EUROPÄISCHE PATENTSCHRIFT

(11) **EP 0 694 344 B1**
(45) Veröffentlichungstag und Bekanntmachung des Hinweises auf die Patenterteilung: **01.10.1997**
(21) Anmeldenummer: 94111529.7
(22) Anmeldetag: 23.07.1994
(51) Int. Cl.: B08B 9/08, B05B 3/06, F16C 19/18, F16C 43/06

(54) **Rotierender Reinigungskopf**
Rotary cleaning head
Tête nettoyeuse rotative

(43) Veröffentlichungstag der Anmeldung: 31.01.1996
(73) Patentinhaber: Lavrids Knudsen Maskinfabrik A/S, 6000 Kolding (DK)
(72) Erfinder: Owens, Robert A., Hampshire S05 eNF (GB); Daugaard, Poul Anton, DK-6000 Kolding (DK)
(74) Vertreter: Vonnemann, Gerhard, Dr.-Ing.

(56) Entgegenhaltungen:
- EP-A- 0 375 938
- GB-A- M27 180
- US-A- 5 086 851
- US-A- 5 301 702

## Beschreibung

Die Erfindung betrifft eine rotierende Vorrichtung zur Reinigung steriler Behälter durch Versprühen von druckbeaufschlagter Reinigungsflüssigkeit gemäß dem Oberbegriff des Anspruchs 1.

Derartige rotierende Reinigungsvorrichtungen, die durch das Reinigungsmittel selbsttätig angetrieben werden, sind beispielsweise aus der WO-A-9204994 bekannt. Die einzelnen Teile der aus dieser Schrift bekannten Reinigungsvorrichtung sind über Kugellager drehbar miteinander verbunden, wobei eine innen angeordnete Turbine die drehbaren Teile antreibt. Solche Tankreinigungsvorrichtungen sind aufwendig herzustellen, da sie aus einer Vielzahl von Teilen zusammengesetzt sind. Dadurch entstehen Fugen, die für sterile Anwendungsfälle grundsätzlich unerwünscht sind. Solche Fugen sind jedoch für Wartungszwecke erforderlich, damit beispielsweise verschlissene Lager ausgetauscht werden können.

Solange derartige Reinigungsvorrichtungen nur zeitweise in Hohlräume eingeführt werden, um diese zu reinigen, sind Fugen von geringerer Bedeutung, da die Geräte nach ihrem Einsatz wieder gereinigt werden können. Bedenklicher sind derartige Konstruktionen, wenn sie fest montiert, beispielsweise in Behältern der Lebensmittelindustrie, eingesetzt werden. Bei wechselnden Füllständen können sich Mikroorganismen in den Trennfugen einnisten. Solche Mikroorganismen an derartigen Orten sind bei der Reinigung nur schwer zugänglich und deshalb nicht sicher abzutöten. Sie gefährden somit ganze Chargen, wenn sie beispielsweise bei wechselnden Füllhöhen mit dem Reinigungskopf wieder in den Behälterinhalt eintauchen.

Eine in dieser Hinsicht weniger bedenkliche Konstruktion ist beispielsweise aus dem Firmenprospekt der Firma TOFTEJORG A/S Nr. 92 AD 10, Version 93.1 bekannt. Diese Konstruktion weist lediglich einen äußeren und einen inneren Gehäuseteil auf, die zueinander koaxial mittels eines einzigen Wälzlagers gelagert sind und von der Reinigungsflüssigkeit durch deren Rückstoß beim Austreten aus Sprühöffnungen relativ zueinander sich drehend angetrieben werden.

Nachteilig an dieser bekannten Reinigungsvorrichtung ist jedoch, daß zum Austausch des verschlissenen Lagers ein Gehäuseteil noch so zerlegbar ausgebildet sein muß, daß das Lager zugänglich wird. In der dafür vorgesehenen Verschraubung können sich weiterhin Mikroorganismen in der Fuge einnisten. Wird diese Fuge aus Sicherheitsgründen verschweißt, so wird der Einsatz der Vorrichtung auf die Lebensdauer des Lagers beschränkt. Außerdem wird der Einsatzbereich dieser Reinigungsvorrichtung dadurch beschränkt, daß ein einwandfreies Arbeiten nur bei senkrechter Anordnung der Drehachse möglich ist. Bei geneigter Drehachse nimmt die Reibung in dem vorgesehenen Lager in einer Weise zu, die ein sicheres Drehen nicht mehr ermöglicht.

Der Patentanspruch 1 geht von der englischen Patentschrift GB 27,180 als nächstkommenden Stand der Technik aus. Diese beschreibt eine Vorrichtung zum Reinigen steriler Behälter der Brauereiindustrie. Sie besteht aus einem äußeren und einem inneren Gehäuseteil, die zur Drehachse koaxial mittels zweier Wälzlager gelagert sind und durch die Reinigungsflüssigkeit relativ zueinander drehend antreibbar sind, wobei der sich drehende Gehäuseteil mit einem mindestens eine Sprühöffnung aufweisenden Reinigungskopf verbunden ist, während der feststehende Gehäuseteil mit einer Zuleitung für die Reinigungsflüssigkeit verbunden ist, und das Wälzlager von der Reinigungsflüssigkeit geschmiert ausgebildet ist.

Zur Montage und Demontage der Lager ist das Gehäuse geteilt, wobei die Gehäuseteile miteinander verschraubt sind. In diesen Gewindegängen können sich Mikroorganismen festsetzen.

Aufgabe der Erfindung ist es eine Reinigungsvorrichtung anzugeben, die den Erfordernissen einer größtmöglichen Sterilität Rechnung trägt und zusätzlich eine möglichst lange Einsatzdauer aufweist.

Diese Aufgabe wird dadurch gelöst, daß Flächen der Gehäuseteile als Laufflächen geformt sind und im äußeren Gehäuseteil mindestens eine Öffnung zum Austausch von Wälzkörpern des Wälzlagers vorgesehen ist, die axial zur Lagerebene versetzt angeordnet ist, wobei der äußere und innere Gehäuseteil axial zueinander um einen Verschiebeweg verschiebbar ausgebildet sind.

Die erfindungsgemäße Vorrichtung weist ein Minimum an Teilen und Fugen auf. Trotzdem lassen sich die Wälzkörper austauschen. Sie kann deshalb fest in sterilen Behältern eingebaut werden, ohne das Kontaminationsrisiko zu erhöhen.

Durch die vorteilhaft wenigen Teile gibt es weniger tote Räume, in denen sich Mikroorganismen festsetzen können. Der Durchfluß von Reinigungsflüssigkeit durch die Lager wird nicht behindert. Obwohl Reingungsflüssigkeit naturgemäß aggressiv ist und schlechte Schmiereigenschaften aufweist, können aufgrund der erfindungsgemäßen Konstruktion befriedigenden Standzeiten der Lager erreicht werden.

Da die Öffnung axial zur Lagerebene versetzt angeordnet ist wird die Lauffläche der Wälzkörper von der Öffnung nicht unterbrochen. Ein Verschließen der Öffnung ist somit nicht notwendig. Lager und Öffnung können von der Reinigungsflüssigkeit gespült werden.

Ein unbeabsichtigtes Herausfallen von Wälzkörpern wird vermieden, indem der äußere und innere Gehäuseteil axial zueinander verschiebbar ausgebildet sind und der Verschiebeweg vorteilhafterweise mittels axialer Anschläge begrenzt ist, wobei mindestens ein Anschlag entfernbar ist.

Die Einsatzmöglichkeiten der Reinigungsvorrichtungen werden wesentlich erweitert, wenn ein zweites Wälzlager vom ersten Wälzlager axial beabstandet vorgesehen ist. In diesem Fall darf nämlich die Drehachse auch gegenüber der Vertikalen geneigt sein. Die dabei entstehenden Gewichtsmomente werden von beiden Wälzlagern aufgenommen. Der leichte Lauf der Vorrichtung bleibt erhalten.

Ein in steriler Hinsicht günstiger Aufbau der Vorrichtung ergibt sich, wenn das äußere Gehäuseteil feststehend und das innere Gehäuseteil drehend ausgebildet sind.

Dasselbe gilt, wenn das äußere Gehäuseteil einstückig ausgebildet ist und/oder wenn das innere Gehäuseteil einstückig ausgebildet ist.

Wenn die Wälzkörper des Lagers abwechselnd aus unterschiedlichen Materialien bestehen, kann auf einen Lagerkäfig verzichtet werden, so daß weitere Teile eingespart werden und somit den Hygieneanforderungen noch besser entsprochen werden kann.

Eine Paarung, bei der die Wälzkörper aus Kunststoff und Metall bestehen, läßt besonders lange Lebensdauern erwarten. Diese Ausgestaltung wird erst durch die erfindungsgemäß vorgesehene Montageöffnung ermöglicht, da die Kunststoffkugeln nachträglich nach etwaig erforderlichen Schweißoperationen montiert werden können.

Eine weitere nachteilige Fuge kann vermieden werden, wenn das äußere Gehäuseteil aus mindestens zwei Teilen mittels Schweißnaht fest verbunden zusammengesetzt ausgebildet ist.

Für bestimmte Einsatzfälle kann es vorteilhaft sein, daß die Öffnung zum Austausch von Wälzkörpern verschließbar ausgebildet ist.

Die Erfindung wird in einer bevorzugten Ausführungsform unter Bezugnahme auf eine Zeichnung beschrieben, wobei weitere vorteilhafte Einzelheiten den Figuren der Zeichnung zu entnehmen sind. Funktionsmäßig gleiche Teile sind dabei mit denselben Bezugszeichen versehen.

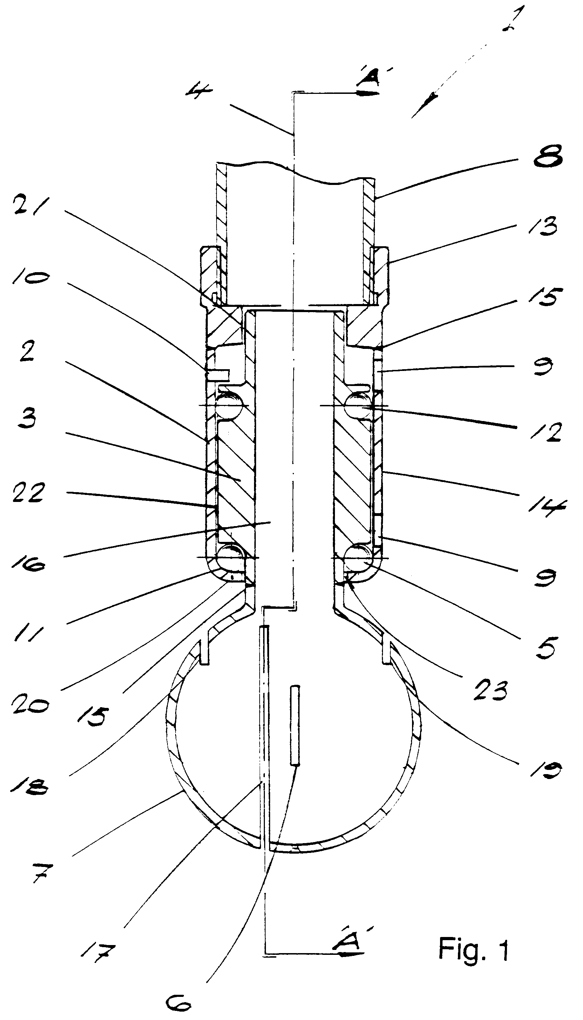

Die Zeichnung zeigt in
- Figur 1: einen Vertikalschnitt durch die erfindungsgemäße Reinigungsvorrichtung und in

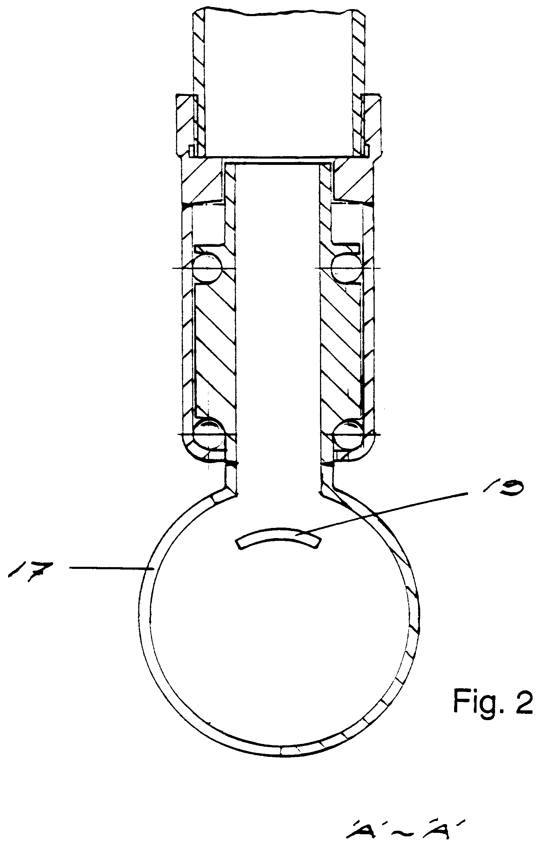

- Figur 2: einen Vertikalschnitt gemäß Schnittlinie A-A in Figur 1.

Die Reinigungsvorrichtung 1 besteht aus einem rohrförmigen äußeren Gehäuseteil 2, das in diesem Falle feststehend ausgebildet ist, und einem darin innen gelagerten inneren Gehäuseteil 3, das drehbar im äußeren Gehäuseteil 2 gelagert ist. Das untere Ende des drehbar gelagerten inneren Gehäuseteils 3 ist mit einem Reinigungskopf 7 verbunden, der mit verschiedenen Sprühöffnungen 6, 17, 18 und 19 versehen ist.

Diese Reinigungsvorrichtung kann wie im dargestellten Fall auf eine feste Zuleitung 8 für Reinigungsflüssigkeit aufgeschraubt werden.

Das innere des Gehäuseteils 3 ist im oberen Bereich durch Wälzlager 12 und im unteren Bereich durch Wälzlager 5 gelagert. Beide Wälzlager sind in diesem Fall als Kugellager ausgebildet. Das untere Wälzlager 5 ist außerdem als Schrägschulterlager ausgestaltet, so daß sich das Gewicht und die sich aus dem Druck der Reinigungsflüssigkeit ergebende Kraft axial auf einer nach innen gezogenen Schulter 20 des äußeren Gehäuseteils abstützen kann. Oberhalb der Wälzlager sind in dem äußeren Gehäuseteil 2 Montageöffnungen 9 vorgesehen, die einen Austausch der Kugeln des Wälzlagers 5 und des Wälzlagers 12 ermöglichen. Die axiale Lage des inneren Gehäuseteils 3 wird unten durch die als Anschlag wirkende Schulter 20 und nach oben durch den Anschlag 10 festgelegt.

Nach Entfernen des Anschlages 10 kann das innere Gehäuseteil 2 mit Reinigungskopf 7 axial nach oben verschoben werden, so daß die Wälzkörper der Wälzlager 5 und 12 in den Bereich der vorgesehenen Montageöffnungen 9 gelangen. Die Kugeln können dann bei entsprechender Neigung der Reinigungsvorrichtung aus Öffnung 9 herausrollen.

Für die Erstmontage sind das innere Gehäuseteil 3 und das äußere Gehäuseteil 2 an Schweißnähten 15 zunächst getrennt. Nach Montage der Teile werden sie dann mittels Schweißnähte 15 zu einem einzigen Stück zusammengefügt. Die dabei entstehende Wärmebeanspruchung kann auf die Wälzlager keinen nachteiligen Einfluß ausüben, da die Wälzkörper erst später durch die Montageöffnungen 9 eingesetzt werden.

Dazu wird, bevor der Stift für den oberen Anschlag 10 eingesetzt ist, das innere Gehäuseteil 3 im äußeren Gehäuseteil 2 nach oben verschoben. Sobald die Lauffläche des ersten Wälzlagers 5 bzw. zweiten Wälzlagers 12 vor der entsprechenden Öffnung 9 liegt, kann der Ringraum zwischen äußerem Gehäuseteil 2 und innerem Gehäuseteil 3 durch Öffnung 9 mit Lagerkörpern, in diesem Fall also Kugeln, befüllt werden. Anschließend werden die Gehäuseteile 2 und 3 wieder so gegeneinander verschoben, daß als oberer Anschlag 10 ein Stift eingesetzt werden kann, der für die Zukunft die Teile in ihrer Lage sichert. Für den Austausch der Wälzkörper kann der obere Anschlag wieder entfernt werden.

Zwischen innerem Gehäuseteil 3 und äußerem Gehäuseteil 2 ist im unteren Bereich ein Spalt 22 und im oberen Bereich ein Spalt 21 vorgesehen. Der innere Hohlraum des Reinigungskopfes 7 ist über eine im inneren Gehäuseteil 3 vorgesehene Bohrung 16 mit Zuleitung 8 verbunden. Die Reinigungsflüssigkeit tritt somit überwiegend durch die Bohrung 16 in den Hohlraum des Reinigungskopfes 7, den sie dann durch die vorgesehenen Sprühöffnungen 17, 18, 19,6 in verschiedenen Richtungen verläßt. Die Sprühöffnungen 18, 19 richten Strahlenfächer vertikal nach oben, während die Öffnung 6 einen Strahlenfächer horizontal zur Seite erzeugt. Der Strahlenfächer 17, der aus dem vertikal und in einem Abstand zur Drehachse 4 angeordneten Schlitz austritt, erzeugt ein Reaktionsmoment, das den Reinigungskopf 7 in Rotation versetzt.

Der Zwischenraum zwischen innerem Gehäuseteil 3 und äußerem Gehäuseteil 2, wird von Reinigungsflüssigkeit gespült. Ein Teilstrom der Reinigungsflüssigkeit tritt nämlich durch Spalt 21 hindurch. Ein Teil hiervon verläßt das Gehäuseinnere bereits durch Öffnung 9. Der übrige Teil spült und schmiert das obere Wälzlager 12. Danach gelangt die Reinigungsflüssigkeit durch Spalt 22 zum unteren Wälzlager 5, das ebenfalls von Reinigungsflüssigkeit gespült und geschmiert wird. Zuvor tritt ein Teil durch die untere Öffnung 9 aus. Die Reinigungsflüssigkeit verläßt dann durch Spalt 23 unten das Innere der Vorrichtung.

Auf diese Weise ist eine Reinigungsvorrichtung geschaffen, die besonders wenige Einzelteile aufweist, Mikroorganismen keine Ansatzpunkte zum Einnisten bietet und beide Teile zusätzlich durch Reinigungsflüssigkeit gespült werden. Sie weist ein besonders hohe Lebensdauer auf, da Verschleißteile austauschbar sind.

### Bezugszeichenliste

- 1: Reinigungsvorrichtung
- 2: äußerer Gehäuseteil
- 3: innerer Gehäuseteil
- 4: Drehachse
- 5: Wälzlager (erstes)
- 6: Sprühöffnung
- 7: Reinigungskopf
- 8: Zuleitung
- 9: Öffnung
- 10: oberer Anschlag
- 11: unterer Anschlag
- 12: Wälzlager (zweites)
- 13: oberes Gehäuseteil
- 14: unteres Gehäuseteil
- 15: Schweißnaht
- 16: Bohrung
- 17,18, 19: Sprühöffnungen
- 20: Schulter
- 21, 22, 23: Spalt

## Patentansprüche

1. Rotierende Vorrichtung (1) zur Reinigung steriler Behälter durch Versprühen von druckbeaufschlagter Reinigungsflüssigkeit bestehend aus einem äußeren (2) und einem inneren (3) Gehäuseteil, die zur Drehachse (4) koaxial mittels eines ersten Wälzlagers (5) gelagert sind und durch die Reinigungsflüssigkeit relativ zueinander drehend antreibbar sind, wobei der sich drehende Gehäuseteil mit einem mindestens eine Sprühöffnung (6) aufweisenden Reinigungskopf (7) verbunden ist, während der feststehende Gehäuseteil mit einer Zuleitung (8) für die Reinigungsflüssigkeit verbunden ist, und das Wälzlager von der Reinigungsflüssigkeit geschmiert ausgebildet ist,
**dadurch gekennzeichnet**, daß Flächen der Gehäuseteile als Laufflächen geformt sind und im äußeren Gehäuseteil mindestens eine Öffnung (9) zum Austausch von Wälzkörpern des Wälzlagers (5) vorgesehen ist, die axial zur Lagerebene versetzt angeordnet ist, wobei der äußere (2) und innere (3) Gehäuseteil axial zueinander um einen Verschiebeweg verschiebbar ausgebildet sind.

2. Rotierende Vorrichtung nach Anspruch 1, **dadurch gekennzeichnet**, daß ein zweites Wälzlager (12) von erstem Wälzlager (5) axial beabstandet vorgesehen ist.

3. Rotierende Vorrichtung nach Anspruch 1 oder 2, **dadurch gekennzeichnet**, daß das äußere Gehäuseteil (2) feststehend und das innere Gehäuseteil (3) drehend ausgebildet sind.

4. Rotierende Vorrichtung nach Anspruch 1, 2 oder 3, **dadurch gekennzeichnet**, daß das äußere Gehäuseteil (2) einstückig ausgebildet ist.

5. Rotierende Vorrichtung nach Anspruch 1, 2, 3 oder 4, **dadurch gekennzeichnet**, daß das innere Gehäuseteil (3) einstückig ausgebildet ist.

6. Rotierende Vorrichtung nach Anspruch 1, 2, 3, 4 oder 5, **dadurch gekennzeichnet**, daß die Wälzkörper des Lagers (5 oder 12) abwechselnd aus unterschiedlichen Materialien bestehen.

7. Rotierende Vorrichtung nach einem oder mehreren der vorhergehenden Ansprüche, **dadurch gekennzeichnet**, daß die Wälzkörper aus Kunststoff und Metall bestehen.

8. Rotierende Vorrichtung nach einem oder mehreren der vorhergehenden Ansprüche, **dadurch gekennzeichnet**, daß das äußere Gehäuseteil aus mindestens zwei Teilen (13, 14) mittels Schweißnaht (15) fest verbunden zusammengesetzt ausgebildet ist.

9. Rotierende Vorrichtung nach einem oder mehreren der vorhergehenden Ansprüche, **dadurch gekennzeichnet**, daß die Öffnung (9) zum Austausch von Wälzkörpern verschließbar ausgebildet ist.

## Claims

1. Rotating device (1) for cleaning sterile containers by spraying pressurised cleaning fluid, which device consists of an outer (2) and an inner (3) housing part, which are mounted coaxially in relation to the axis of rotation (4) by means of a first rolling bearing (5) and can be driven in rotation relative to one another by the cleaning fluid, the rotating housing part being connected to a cleaning head (7) having at least one spraying aperture (6), while the stationary housing part is connected to a supply line (8) for the cleaning fluid and the rolling bearing is constructed so as to be lubricated by the said cleaning fluid,
**characterised in that** faces of the housing parts are shaped as running surfaces and there is provided, in the outer casing part, at least one aperture (9) for the replacement of rolling bodies of the rolling bearing (5), which aperture is disposed so as to be axially offset in relation to the plane of the bearing, the outer (2) and inner (3) housing parts being constructed so as to be axially displaceable, by a displacement path, in relation to one another.

2. Rotating device according to claim 1,
**characterised in that** a second rolling bearing (12) is provided at an axial distance from the first rolling bearing (5).

3. Rotating device according to claim 1 or 2,
**characterised in that** the outer housing part (2) is constructed in a stationary manner, and the inner housing part (3) in a rotating manner.

4. Rotating device according to claim 1, 2 or 3,
**characterised in that** the outer housing part (2) is constructed in one piece.

5. Rotating device according to claim 1, 2 or 4,
**characterised in that** the inner housing part (3) is constructed in one piece.

6. Rotating device according to claim 1, 2, 3, 4 or 5,
**characterised in that** the rolling bodies of the bearing (5) or (12) consist alternately of different materials.

7. Rotating device according to one or more of the preceding claims,
**characterised in that** the rolling bodies consist of plastic and metal.

8. Rotating device according to one or more of the preceding claims,
**characterised in that** the outer housing part is constructed from at least two parts (13, 14) so as to be assembled in a fixedly connected manner by means of a weld seam (15).

9. Rotating device according to one or more of the preceding claims,
**characterised in that** the aperture (9) for the replacement of rolling bodies is constructed so as to be closable.

## Revendications

1. Dispositif tournant (1) destiné au nettoyage de récipients par pulvérisation d'un liquide de nettoyage sous pression, dispositif constitué de parties de boîtier externe (2) et interne (3) qui sont montées coaxiales sur un axe de rotation (4) par l'intermédiaire d'un premier palier de roulement (5) et qui peuvent être entraînées en rotation relative par le liquide de nettoyage, la partie de boîtier qui tourne étant reliée à une tête de nettoyage (7) présentant au moins une ouverture de pulvérisation (6), alors que la partie de boîtier fixe est reliée à une canalisation (8) d'amenée du liquide de nettoyage et que le palier de roulement est lubrifié par le liquide de nettoyage,
caractérisé en ce que
des surfaces des parties de boîtier sont sous la forme de surfaces de roulement et que dans la partie de boîtier externe (9) au moins une ouverture (9) est prévue permettant l'échange des corps roulants du palier (5), cette ouverture étant décalée axialement par rapport au plan du roulement, tandis que les parties externe (2) et interne (3) de boîtier sont constituées de manière à pouvoir se déplacer l'une par rapport à l'autre, par coulissement axial.

2. Dispositif tournant selon la revendication 1,
caractérisé en ce qu'
il comporte un second palier de roulement (12) situé à une certaine distance axiale du premier (5).

3. Dispositif tournant selon l'une quelconque des revendications 1 ou 2,
caractérisé en ce que
la partie de boîtier externe (2) est fixe tandis que la partie de boîtier interne (3) est tournante.

4. Dispositif tournant selon l'une quelconque des revendications 1, 2 ou 3,
caractérisé en ce que
la partie de boîtier externe (2) est d'une seule pièce.

5. Dispositif tournant selon l'une quelconque des revendications 1, 2, 3 ou 4,
caractérisé en ce que
la partie de boîtier interne (3) est d'une seule pièce.

6. Dispositif tournant selon l'une quelconque des revendications 1, 2, 3, 4 ou 5,
caractérisé en ce que
les corps roulants du palier (5 ou 12) sont alternativement constitués de matériaux différents.

7. Dispositif tournant selon une ou plusieurs des revendications précédentes,
caractérisé en ce que
les corps roulants sont en matière plastique et en métal.

8. Dispositif tournant selon une ou plusieurs des revendications précédentes,
caractérisé en ce que
la partie de boîtier externe est constituée par l'assemblage d'au moins deux parties (13, 14) solidarisées par un cordon de soudure (15).

9. Dispositif tournant selon une ou plusieurs des revendications précédentes,
caractérisé en ce que
l'ouverture (9), permettant l'échange des corps roulants, peut être obturée.
